# EUROPÄISCHE PATENTSCHRIFT

(11) **EP 2 375 117 B1**
(45) Veröffentlichungstag und Bekanntmachung des Hinweises auf die Patenterteilung: **13.08.2014**
(21) Anmeldenummer: 11161537.3
(22) Anmeldetag: 07.04.2011
(51) Int. Cl.: F16L 5/02, E04D 13/147, E04D 12/00

(54) **Luftdichtungsmanschette**
Air seal sleeve
Manchette d'étanchéité contre l'air

(30) Priorität: 08.04.2010 DE 102010014188
(43) Veröffentlichungstag der Anmeldung: 12.10.2011
(73) Patentinhaber: Biologische Insel Lothar Moll GmbH & Co. KG, 68723 Schwetzingen (DE)
(72) Erfinder: Herms, Jens-Lüder, 68723 Schwetzingen (DE)
(74) Vertreter: Thews, Karl

(56) Entgegenhaltungen:
- EP-A1- 1 162 710
- DE-A1- 10 201 152
- DE-A1- 19 857 483
- DE-A1-102004 038 687
- DE-A1-102007 052 278
- DE-U1-202008 014 501

## Beschreibung

Die Notwendigkeit an die Luftdichtheit von Gebäuden ist vor allem durch die Energieeinsparverordnung geregelt. Diese und weitere bauaufsichtlich eingeführten Normen regeln Grenzwerte für den Grad der Undichtheiten und geben Empfehlungen für die Ausführung der Luftdichtungsmaßnahmen. Die Luftdichtheit von Gebäuden im Bereich von Installationsdurchdringungen beispielsweise im Dachbereich eines Gebäudes kann nach dieser Norm mit Luftdichtungsmanschetten erreicht werden.

Die Erfindung bezieht sich auf eine Luftdichtungsmanschette zum Abdichten eines durch eine Luftdichtungsbahn geführten Körpers gegenüber der Luftdichtungsbahn. Die Luftdichtungsmanschette weist ein auf die Luftdichtungsbahn aufklebbares und den Körper umlaufendes Grundelement auf. Am Grundelement ist zumindest eine Ausnehmung zum Durchführen des Körpers durch das Grundelement vorgesehen. Zudem weist das Grundelement eine an die Luftdichtungsbahn anlegbare Klebefläche auf. Auf der der Klebefläche gegenüberliegenden Oberseite des Grundelements ist ein Kragenelement aufgesetzt. Das Kragenelement ist in einen Montagebereich und in einen neben dem Montagebereich angeordneten Installationsbereich eingeteilt. Das Kragenelement ist mit dem Installationsbereich an den Körper anklebbar.

In der DE 20 2008 014 501 U wird ein universell verwendbares Winkel-Eckmanschetten-Set als Außen- und Innen-Abdichtungssystem für rechtwinklige Kamine, Kanäle und Schächte und sonstige Durchdringungen beschrieben, das aus vier gleichartigen Winkel-Eckmanschetten besteht, die durch selbstklebende Klebezonen, in der Länge gekürzt, überlappend, maßgenau und regenwasser- und luftdicht zu einer Einheit verbunden werden können.

Die DE 10 2004 038 687 A1 beschreibt eine gattungsgemäße Luftdichtungsmanschette, insbesondere für Installationsdurchdringungen an Gebäuden wie Rohr- oder Leitungsdurchführungen. Die Luftdichtungsmanschette weist eine Dichtplane zur Anlage an einer im Wesentlichen planen Fläche und einen Dichtkragen auf, welcher um einen Durchgang in der Dichtplane angeordnet ist und von der Dichtplane vorsteht. Ein erster Schlitz führt von einem Rand der Dichtplane zu dem Durchgang und ein zweiter Schlitz von einer offenen Stirnseite des Dichtkragens zu der anderen offenen Stirnseite des Dichtkragens. Die Dichtplane und der Dichtkragen sind zweiteilig ausgebildet und derart aneinander festgelegt, dass der erste Schlitz und der zweite Schlitz einen gemeinsamen durchgehenden Schlitz bilden. Somit ist die Luftdichtungsmanschette offen und kann beispielsweise über ein Rohr oder eine Leitung gefädelt werden.

Die EP 1 162 710 A1 beschreibt eine Durchführeinrichtung mit einer Tülle. Die Tülle ist aus elastischem Material und liegt zumindest mit einem Teilbereich dampfdicht an einer Leitung an. Die Tülle schließt an einen Kragen, der mit einer Seite auf die Luftdichtungsbahn auflegbar ist, an. Der Kragen ist an der Luftdichtungsbahn dampfdicht anklebbar. Am Kragen, auf der der Auflageseite gegenüberliegenden Seite, ist eine ringförmige Klebefolie festgeklebt. Die Klebefolie überragt den Kragen seitlich umlaufend.

Der Erfindung liegt die Aufgabe zugrunde, eine Luftdichtungsmanschette in Bezug auf den abzudichtenden Körper variabel zu gestalten und gleichzeitig eine kostengünstige Lösung zu bieten.

Gelöst wird die Aufgabe verfahrenstechnisch dadurch, dass mindestens zwei Kragenelemente auf dem Grundelement vorgesehen sind, wobei mit Bezug in Richtung einer X-Achse beidseitig oder gegenüberliegend zu der Ausnehmung jeweils ein Kragenelement angeordnet ist. Dabei sind die beiden Installationsbereiche der beiden Kragenelemente zumindest teilweise miteinander verklebbar. Das Grundelement und die Kragenelemente sind jeweils aus einem Abschnitt eines diffusionsoffenen Klebebandes hergestellt.

Durch die beiden, dem Körper gegenüberliegenden Kragenelemente wird erreicht, dass unabhängig von der Größe und der Form des Körpers, ein dichter Anschluss gewährleistet ist, weil die beiden Installationsbereiche ohne feste Formgebung individuell an einem Körper entlang und um den Körper herum gelegt und mit diesem verklebt werden können.

Unter einer Luftdichtungsbahn ist eine Dachbahn oder eine Unterdeckbahn oder eine Unterspannbahn oder eine Dampfbremse mit einem sd-Wert zwischen 0,01 m bis 10 m zu verstehen. Solche Bahnen werden im Baubereich im Dach oder auf Innenwänden eingesetzt, um das Gebäude luftdicht zu isolieren und gleichzeitig die Diffusion von Wasserdampf von innen nach außen und umgekehrt zu gewährleisten.

Vorteilhaft ist es hierzu, dass beide Kragenelemente mit dem Montagebereich auf die Oberseite des Grundelements aufgeklebt sind. Hierdurch wird bei der Konfektionierung eine Flexibilität hinsichtlich ihrer Länge in Bezug zur Breite des Klebebandes und des Abstandes der Kragenelemente in Richtung einer X-Achse erreicht.

Erfindungsgemäß ist vorgesehen, dass die Luftdichtungsmanschette aus zumindest drei Abschnitten eines Klebebandes zusammengesetzt ist. Die Herstellung aus Materialien eines herkömmlichen und für solche Zwecke einsetzbaren Klebebandes ist einfach, wobei die Abschnitte maschinell miteinander vorkonfektioniert werden können.

Hierzu ist es vorteilhaft, dass das Kragenelement zwischen dem Montagebereich und dem Installationsbereich eine gerade, linienförmige Falte aufweist und in der Falte geknickt ist. Durch die Falte ist die vorkonfektionierte Luftdichtungsmanschette aufgeklappt und kann einfach über einen Körper geführt werden. Zudem kann nach der Montage des Grundelements auf der Luftdichtungsbahn einfach die Schutzfolie im Installationsbereich entfernt werden.

In Bezug auf die Falten ist es vorteilhaft, dass mindestens die beiden Falten von zwei bezüglich der Ausnehmung gegenüberliegenden Kragenelementen parallel oder winklig zueinander ausgerichtet sind. Damit ist die Luftdichtungsmanschette adaptiv für die meisten rechteckförmigen Grundformen von Körpern, die es abzudichten gilt.

Je nachdem wie dick der abzudichtende Körper ist sind die Luftdichtungsmanschetten unterschiedlich breit. Bevorzugt weisen die Kragenelemente eine Breite auf, die mindestens der Breite des Grundelements entspricht, wobei die Kragenelemente in Abhängigkeit und mit Zunahme der Länge der Ausnehmung breiter als das Grundelement sein können. Damit je nach Länge und Breite des abzudichtenden Körpers die Luftdichtungsmanschette ausreichend dimensioniert ist, muss nicht nur die Luftdichtungsmanschette breit genug, sondern auch die Kragenelemente breit genug sein, um den Körper vollständig zu umschließen. Hierfür ist die Länge des Körpers beziehungsweise die Länge der Ausnehmung maßgebend, weil die Kragenelemente vor und hinter dem Körper miteinander verbunden und geschlossen werden.

Vorteilhaft ist es auch, dass mindestens vier Kragenelemente auf dem Grundelement vorgesehen sind, wobei das Grundelement zwei Ausnehmungen aufweist und jeweils zwei Kragenelemente einer Ausnehmung zugeordnet sind. Damit kann eine Vorkonfektionierung einer Luftdichtungsmanschette für zwei abzudichtende Körper erfolgen. Die Anzahl der Kragenelemente auf einem Grundelement kann je nach Anzahl der Körper paarweise beliebig erhöht werden.

Vorteilhaft ist es auch, dass mindestens das Grundelement an der Ausnehmung einen Schlitz aufweist, der parallel zu einer Falte angeordnet ist und von der Ausnehmung bis an einen Rand ragt und das Grundelement öffnet. Damit muss das Grundelement nicht über den Körper gestülpt werden, sondern kann im Bereich der Luftdichtungsbahn auf und um den Körper gelegt werden.

Weitere Vorteile und Einzelheiten der Erfindung sind in den Patentansprüchen und in der Beschreibung erläutert und in den Figuren dargestellt. Es zeigt:
- Figur 1: eine schematische Schnittansicht einer noch nicht installierten Luftdichtungsmanschette mit zwei Kragenelementen gemäß der Schnittführung A-A' in Fig. 2;
- Figur 2: eine Draufsicht auf eine Luftdichtungsmanschette gemäß Fig. 1 mit einer rechteckförmigen Ausnehmung;
- Figur 3: eine Draufsicht auf eine Luftdichtungsmanschette gemäß Fig. 1 in montiertem Zustand;
- Figur 4: eine Draufsicht auf eine Luftdichtungsmanschette ähnlich der gemäß Fig. 2 mit einer kreisrunden Ausnehmung und einem Schlitz zum Öffnen des Grundelements;
- Figur 5: eine Draufsicht auf eine Luftdichtungsmanschette ähnlich der gemäß Fig. 2 für einen sehr langen Körper und einer entsprechend langen Ausnehmung und eines entsprechend breiten Kragenelements.

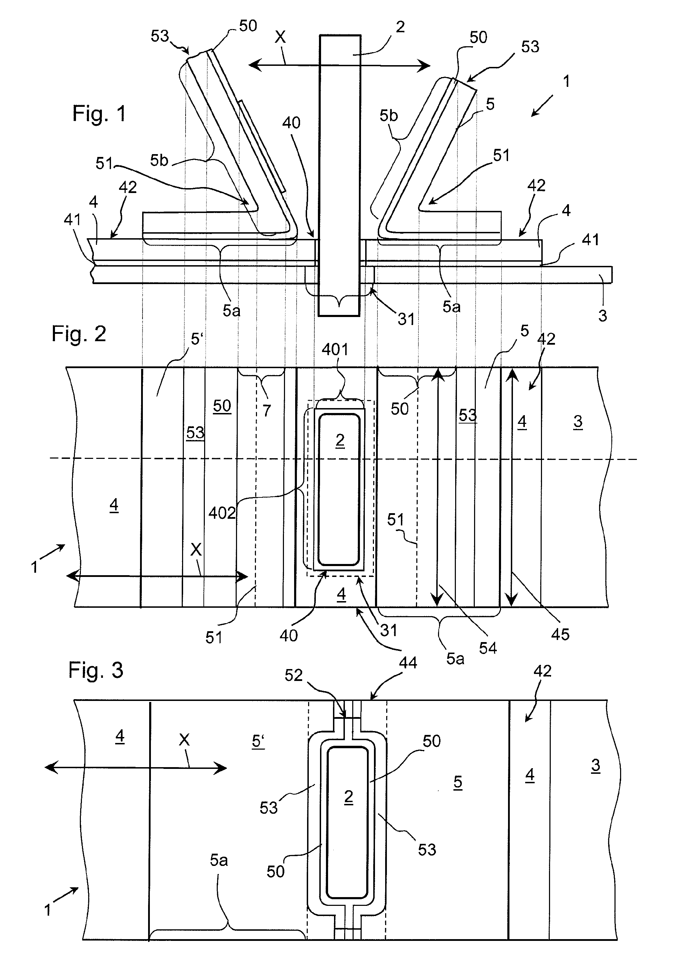

In Fig. 1 ist eine schematische Schnittansicht gemäß der Schnittführung A-A' nach Fig. 2 einer Luftdichtungsmanschette 1 dargestellt, die auf eine Luftdichtungsbahn 3 aufgeklebt ist. Die Luftdichtungsbahn 3 weist eine Öffnung 31 auf, durch die ein Körper 2 in Form eines Trägerelements hindurchgeführt ist. Den Körper 2 gilt es gegenüber der Luftdichtungsbahn 3 abzudichten, d. h. die Öffnung 31 luftdicht zu schließen.

Hierzu besteht die Luftdichtungsmanschette 1 aus einem Grundelement 4 mit einer Ausnehmung 40. Mit der Ausnehmung 40 wird das Grundelement 4 beziehungsweise eine Luftdichtungsmanschette 1 auf den Körper 2 gestülpt und mit einer Klebefläche 41 an die Luftdichtungsbahn 3 aufgeklebt. Die Klebefläche 41 ist durch eine Schutzfolie 7, die vor der Verklebung abgezogen werden muss, geschützt. Die Ausnehmung 40 ist größer als der Querschnitt des Körpers 2, sodass mit dem Grundelement 4 noch kein luftdichter Abschluss möglich ist. Je nach Länge und Breite des Körpers 2 variiert die Länge 401 und die Breite 402 der Ausnehmung 40.

Grundsätzlich sind die Längen in Richtung einer X-Achse und die Breiten in einer Richtung rechtwinklig dazu definiert.

Für den luftdichten Abschluss ist beidseitig der Ausnehmung 40 jeweils eines von insgesamt zwei Kragenelementen 5, 5' vorgesehen. Die beiden Kragenelemente 5, 5' sind mit ihrer Klebeschicht 50 auf eine Oberseite 42 des Grundelements 4 aufgeklebt. Jedes Kragenelement 5, 5' weist einen Montagebereich 5a und einen Installationsbereich 5b auf. Mit dem Montagebereich 5a ist das jeweilige Kragenelement 5, 5' auf dem Grundelement 4 aufgeklebt. Der Installationsbereich 5b dient dazu, das jeweilige Kragenelement 5, 5' teilweise um den Körper 2 zu verlegen und an dem Körper 2 festzukleben. Hierzu bilden die Kragenelemente 5, 5' ein in Fig. 1 im Querschnitt dargestelltes, im Wesentlichen L-förmiges Profil, das aus einem Abschnitt eines Klebebandes hergestellt ist. Die Knickstelle des L-Profils bildet eine gerade, linienförmige Falte 51, 51`.

Wie in Fig. 2 in der Draufsicht dargestellt ist, verläuft das L-Profil beziehungsweise das jeweilige Kragenelement 5, 5' in einer Richtung rechtwinklig zur Richtung X, parallel zur Falte 51. In der Draufsicht sind die einzelnen Bereiche 55 der Kragenelemente 5, 5' und der Luftdichtungsmanschette 1 von oben zu erkennen, so beispielsweise eine Stirnseite 53 des Kragenelements 5.

In den Fig. 1 und 2 sind die Kragenelemente 5, 5' noch nicht an den Körper 2 angeklebt.

In Fig. 3 sind die beiden Installationsbereiche 5b der beiden Kragenelemente 5, 5' jeweils hälftig um den Körper 2 verlegt und an diesen mit der Klebeschicht 50 angeklebt. Der Verlauf der Stirnseiten 53, 53' zeigt beispielhaft, wie sich das jeweilige Kragenelement 5, 5' an und um den Körper 2 anschmiegt und somit eine luftdichte Abdichtung gewährleistet. Damit die Enden der Kragenelemente 5, 5' ausgehend von der Anordnung parallel zur Falte 51 in Richtung der X-Achse um den Körper 2 umknicken können, sind die Kragenelemente 5, 5' im Bereich 55 der Falte 51 eingeschnitten. Die Bereiche 55 haben in einer Richtung rechtwinklig zur X-Achse einen Abstand, der ungefähr der Breite des Körpers 2 entspricht.

In dem in Fig. 3 dargestellten Fall ist die Länge des Körpers 2 nicht so groß, sodass die Breite 54 der Kragenelemente 5, 5`, welche der Breite 45 des Grundelements 4 entspricht ausreicht, um den Körper 2 zu umschließen. Durch das Umschließen ist die Kante 52 des oberen Teils der Kragenelemente 5, 5' gegenüber dem Rand 44 nach innen versetzt.

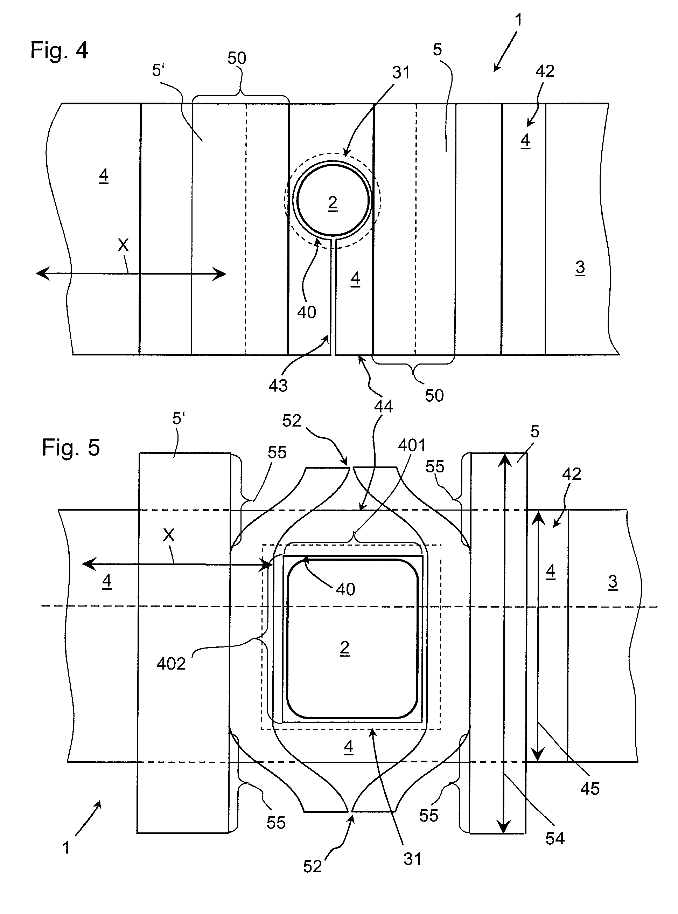

In einem in Fig. 5 dargestellten Ausführungsbeispiel, ist der Körper 2 im Querschnitt größer und damit ebenfalls die Länge 401 und die Breite 402 der Ausnehmung 40. Die Breite 54 der Kragenelemente 5, 5' ist somit größer als die Breite 45 des Grundelements 4, um den Körper 2 beim Anschließen der Kragenelemente 5, 5' vollständig von allen Seiten zu umschließen.

In Fig. 4 ist ein Ausführungsbeispiel für einen runden Körper 2 wie beispielsweise ein Kabel dargestellt. Hier unterscheidet sich lediglich die Form der Ausnehmung 40 gegenüber den Ausführungsbeispielen nach Fig. 1 bis 3. Das Grundelement 4 weist einen an die Ausnehmung 40 angrenzenden und das Grundelement 4 bis zum Rand 44 des Grundelements 4 trennenden Schlitz 43 auf, damit das Grundelement 4 über den Körper 2 gestülpt werden kann. Die Form der Kragenelemente 5, 5' ist die gleiche und das Prinzip des Verklebens auch. Das jeweilige Kragenelement 5, 5' wird hälftig um den Körper 2 herumgelegt und an den Körper 2 angeklebt. In den Fig. 4 und 5 ist die Luftdichtungsmanschette 1 vereinfacht dargestellt und die in Fig. 2 zahlreich dargestellten Kanten nicht alle eingezeichnet, damit die Übersichtlichkeit gewahrt bleibt.

## Patentansprüche

1. Luftdichtungsmanschette (1) zum Abdichten eines durch eine Luftdichtungsbahn (3) geführten Körpers (2) gegenüber der Luftdichtungsbahn (3) mit
a) einem auf die Luftdichtungsbahn (3) aufklebbaren und den Körper (2) umlaufenden Grundelement (4), wobei das Grundelement (4) zumindest eine Ausnehmung (40) zum Durchführen des Körpers (2) durch das Grundelement (4) und eine an die Luftdichtungsbahn (3) anlegbare Klebefläche (41) aufweist;
b) einem auf die der Klebefläche (41) gegenüberliegenden Oberseite (42) des Grundelements (4) aufgesetzten Kragenelement (5), wobei
c) das Kragenelement (5) einen Montagebereich (5a) und einen neben dem Montagebereich (5a) angeordneten Installationsbereich (5b) aufweist und
d) das Kragenelement (5) mit dem Installationsbereich (5b) an den Körper (2) anklebbar ist,
**dadurch gekennzeichnet, dass**
e) mindestens zwei Kragenelemente (5, 5`) auf dem Grundelement (4) vorgesehen sind, wobei
f) mit Bezug in Richtung einer X-Achse beidseitig oder gegenüberliegend zu der Ausnehmung (40) jeweils ein Kragenelement (5, 5') angeordnet ist und
g) die beiden Installationsbereiche (5b) der beiden Kragenelemente (5, 5') zumindest teilweise miteinander verklebbar sind **und**
**h)** das Grundelement (4) und die Kragenelemente (5, 5') jeweils aus einem Abschnitt eines diffusionsoffenen Klebebandes hergestellt sind.

2. Luftdichtungsmanschette (1) nach Anspruch 1, **dadurch gekennzeichnet, dass** beide Kragenelemente (5, 5') mit dem Montagebereich (5a) auf die Oberseite (42) des Grundelements (4) aufgeklebt sind.

3. Luftdichtungsmanschette (1) nach Anspruch 1 oder 2, **dadurch gekennzeichnet, dass** die Luftdichtungsmanschette (1) aus zumindest drei Abschnitten eines Klebebandes zusammengesetzt ist.

4. Luftdichtungsmanschette (1) nach einem der vorstehenden Ansprüche, **dadurch gekennzeichnet, dass** das Kragenelement (5) zwischen dem Montagebereich (5a) und dem Installationsbereich (5b) eine gerade, linienförmige Falte (51) aufweist und in der Falte (51) geknickt ist.

5. Luftdichtungsmanschette (1) nach Anspruch 4, **dadurch gekennzeichnet, dass** die beiden Falten (51, 51') von zwei bezüglich der Ausnehmung (40) gegenüberliegenden Kragenelementen (5, 5') parallel oder winklig zueinander ausgerichtet sind.

6. Luftdichtungsmanschette (1) nach einem der vorstehenden Ansprüche, **dadurch gekennzeichnet, dass** die Kragenelemente (5, 5') eine Breite (54) aufweisen, die mindestens der Breite (45) des Grundelements (4) entspricht, wobei die Kragenelemente (5, 5') in Abhängigkeit und mit Zunahme der Länge (401) der Ausnehmung (40) breiter als das Grundelement (4) sein können.

7. Luftdichtungsmanschette (1) nach einem der Ansprüche 4 oder 5 **dadurch gekennzeichnet, dass** die Ausnehmung (40) rund oder oval ausgebildet ist und die jeweilige Falte (51) tangential oder sekantial zur Ausnehmung (40) angeordnet ist.

8. Luftdichtungsmanschette (1) nach einem der vorstehenden Ansprüche, **dadurch gekennzeichnet, dass** vier Kragenelemente (5, 5') auf dem Grundelement (4) vorgesehen sind, wobei das Grundelement (4) zwei Ausnehmungen (40) aufweist und jeweils zwei Kragenelemente (5, 5') einer Ausnehmung (40) zugeordnet sind.

9. Luftdichtungsmanschette (1) nach einem der vorstehenden Ansprüche, **dadurch gekennzeichnet, dass** das Grundelement (4) an der Ausnehmung (40) einen Schlitz (43) aufweist, der parallel zu einer Falte (51) angeordnet ist und der von der Ausnehmung (40) bis an einen Rand (44) ragt und das Grundelement (4) öffnet.

10. System bestehend aus einer Luftdichtungsmanschette (1) nach einem der vorstehenden Ansprüche und einer Luftdichtungsbahn (3) in Form einer Dachbahn und/oder Unterdeckbahn und/oder Unterspannbahn und/oder Dampfbremse mit einem sd-Wert zwischen 0,01 m bis 10 m.

## Claims

1. An airtight sleeve (1) for sealing a body (2) which extends through an airtight membrane (3) relative to the airtight membrane (3), comprising
a) a base (4) which can be glued to the airtight membrane (3) and surrounds the body (2), which base (4) has at least one recess (40) for passing the body (2) through the base (4) and an adhesive surface (41) which can be placed on the airtight membrane (3);
b) a collar element (5) which is placed on the upper side (42) of the base (4) opposite the adhesive surface (41), wherein
c) the collar element (5) comprises a mounting area (5a) and an installation area (5b) which is arranged adjacent to the mounting area (5a), and
d) the installation area (5b) of the collar element (5) can be glued to the body (2),
**characterized in that**
e) at least two collar elements (5, 5') are provided on the base (4), wherein
f) one collar element (5, 5') is arranged on each side of, or opposite, the recess (40), relative to the direction of an X axis, and
g) at least parts of the two installation areas (5b) of the two collar elements (5, 5') can be glued to each other.

2. The airtight sleeve (1) according to claim 1, **characterized in that** the mounting areas (5a) of both collar elements (5, 5') are glued to the upper side (42) of the base (4).

3. The airtight sleeve (1) according to claim 1 or 2, **characterized in that** the base (4) and the collar elements (5, 5') are each made of a piece of a vapour-permeable adhesive tape and the airtight sleeve (1) is made of at least three pieces of an adhesive tape.

4. The airtight sleeve (1) according to any one of the preceding claims, **characterized in that** the collar element (5) comprises a straight, line-shaped crease (51) between the mounting area (5a) and the installation area (5b) and is folded along the crease (51).

5. The airtight sleeve (1) according to claim 5, **characterized in that** the two creases (51, 51') of two collar elements (5, 5') which are opposite each other, relative to the recess (40), are aligned parallel or at an angle to each other.

6. The airtight sleeve (1) according to any one of the preceding claims, **characterized in that** the collar elements (5, 5') have a width (54) which is at least the same as the width (45) of the base (4), wherein the collar elements (5, 5') may be wider than the base (4), depending on the length (401), and associated with an increase in length, of the recess (40).

7. The airtight sleeve (1) according to any one of claims 5 to 6, **characterized in that** the recess (40) is circular or oval and the crease (51) is arranged so as to be a tangent or a secant to the recess (40).

8. The airtight sleeve (1) according to any one of the preceding claims, **characterized in that** four collar elements (5, 5') are provided on the base (4), wherein the base (4) has two recesses (40) and two collar elements (5, 5') are assigned to each recess (40).

9. The airtight sleeve (1) according to any one of the preceding claims, **characterized in that** the base (4) comprises a slot (43) at the recess (40), which slot is arranged parallel to a crease (51) and extends from the recess (40) to an edge (44) and opens the base (4).

10. A system consisting of an airtight sleeve (1) according to any one of the preceding claims and an airtight membrane (3) in the form of a roofing membrane and/or a roofing underlay and/or a roofing lining and/or a vapour barrier whose s_{d} value is between 0.01 m and 10 m.

## Revendications

1. Manchette d'étanchéité à l'air (1) pour l'étanchéification d'un corps (2) passé par une bande d'étanchéité à l'air (3) vis-à-vis de la bande d'étanchéité à l'air (3), avec
a) un élément de base (4) collable sur la bande d'étanchéité à l'air (3) et entourant le corps (2), l'élément de base (4) présentant au moins un évidement (40) pour le passage du corps (2) par l'élément de base (4) et une surface de collage (41) plaçable contre la bande d'étanchéité à l'air (3) ;
b) un élément formant collier (5) posé sur le côté supérieur (42) de l'élément de base (4) opposé à la surface de collage (41),
c) l'élément formant collier (5) présentant une zone de montage (5a) et une zone d'installation (5b) disposée à côté de la zone de montage (5a) et
d) l'élément formant collier (5) étant collable sur le corps (2) avec la zone d'installation (5b),
**caractérisée en ce que**,
e) au moins deux éléments formant collier (5, 5') sont prévus sur l'élément de base (4),
f) un élément formant collier (5, 5') étant disposé respectivement des deux côtés ou en face de l'évidement (40), en se rapportant au sens d'un axe X, et
g) les deux zones d'installation (5b) des deux éléments formant collier (5, 5') étant au moins partiellement collables l'une avec l'autre.

2. Manchette d'étanchéité à l'air (1) selon la revendication 1, **caractérisée en ce que** les deux éléments formant collier (5, 5') sont collés sur le côté supérieur (42) de l'élément de base (4) avec la zone de montage (5a).

3. Manchette d'étanchéité à l'air (1) selon la revendication 1 ou 2, **caractérisée en ce que** l'élément de base (4) et les éléments formant collier (5, 5') sont respectivement fabriqués dans une section d'une bande adhésive ouverte à la diffusion et **en ce que** la manchette d'étanchéité à l'air (1) se compose d'au moins trois sections d'une bande adhésive.

4. Manchette d'étanchéité à l'air (1) selon l'une des revendications précédentes, **caractérisée en ce que** l'élément formant collier (5) présente un pli (51) droit, en forme de ligne, entre la zone de montage (5a) et la zone d'installation (5b), et est coudé au niveau du pli (51).

5. Manchette d'étanchéité à l'air (1) selon la revendication 5, **caractérisée en ce que** les deux plis (51, 51') sont orientés parallèlement ou de façon angulaire l'un par rapport à l'autre par deux éléments formant collier (5, 5') opposés relativement à l'évidement (40).

6. Manchette d'étanchéité à l'air (1) selon l'une des revendications précédentes, **caractérisée en ce que** les éléments formant collier (5, 5') présentent une largeur (54) qui correspond au moins à la largeur (45) de l'élément de base (4), les éléments formant collier (5, 5') pouvant être plus larges que l'élément de base (4) en fonction de la longueur (401) de l'évidement (40) et de l'augmentation de celle-ci.

7. Manchette d'étanchéité à l'air (1) selon l'une des revendications 5 à 6, **caractérisée en ce que** l'évidement (40) est formé de façon ronde ou ovale et **en ce que** le pli (51) respectif est disposé de façon tangentielle ou sécante relativement à l'évidement (40).

8. Manchette d'étanchéité à l'air (1) selon l'une des revendications précédentes, **caractérisée en ce que** quatre éléments formant collier (5, 5') sont prévus sur l'élément de base (4), l'élément de base (4) présentant deux évidements (40) et deux éléments formant collier (5, 5') étant respectivement attribués à un évidement (40).

9. Manchette d'étanchéité à l'air (1) selon l'une des revendications précédentes, **caractérisée en ce que** l'élément de base (4) présente une encoche (43) sur l'évidement (40), laquelle est disposée de façon parallèle à un pli (51) et dépasse de l'évidement (40) jusqu'à un bord (44) et ouvre l'élément de base (4).

10. Système se composant d'une manchette d'étanchéité à l'air (1) selon l'une des revendications précédentes et d'une bande d'étanchéité à l'air (3) sous la forme d'un écran de toiture et/ou d'un écran de sous-toiture et/ou d'un lé de sous-toiture et/ou d'un pare-vapeur avec une valeur Sd entre 0,01 m et 10 m.
